# EUROPÄISCHE PATENTSCHRIFT

(11) **EP 3 399 221 B1**
(45) Veröffentlichungstag und Bekanntmachung des Hinweises auf die Patenterteilung: **02.08.2023**
(21) Anmeldenummer: 18170675.5
(22) Anmeldetag: 03.05.2018
(51) Int. Cl.: F16L 55/035, F16L 3/223, F16L 3/10

(54) **BEFESTIGUNGSVORRICHTUNG FÜR SCHLÄUCHE**
FASTENING DEVICE FOR HOSES
DISPOSITIF DE FIXATION POUR FLEXIBLES

(30) Priorität: 04.05.2017 DE 102017207513
(43) Veröffentlichungstag der Anmeldung: 07.11.2018
(73) Patentinhaber: Hamm AG, 95643 Tirschenreuth (DE)
(72) Erfinder: Pieske, Ronny, 08297 Zwönitz (DE); Wolfrum, Holger, 95671 Bärnau (DE)
(74) Vertreter: dompatent von Kreisler Selting Werner - Partnerschaft von Patent- und Rechtsanwälten mbB

(56) Entgegenhaltungen:
- EP-A1- 1 493 954
- WO-A1-2011/028705
- WO-A1-2015/177181
- DE-A1- 4 205 439
- DE-A1-102012 216 236
- DE-T2- 60 309 630
- DE-T2- 60 309 630
- US-A1- 2007 018 057
- US-A1- 2008 149 783
- US-A1- 2010 193 651

## Beschreibung

Die vorliegende Erfindung betrifft eine Befestigungsvorrichtung für Schläuche nach dem Oberbegriff des Anspruchs 1.

Derartige Befestigungsvorrichtungen werden beispielsweise für Hydraulikschläuche an Baufahrzeugen verwendet. Hierbei besteht grundsätzlich das Problem, dass die Hydraulikschläuche Ermüdungserscheinungen zeigen, die durch "Aufscheuern" entstehen. Bei vorbekannten Befestigungsvorrichtungen, die auch Schlauchschellen genannt werden, kann die Beschädigung des Schlauches vorwiegend durch scharfe und starre Kanten an den Befestigungsvorrichtungen verursacht werden. Hierbei kann es zu einer Freilegung des inneren Gewebes der Hydraulikschläuche und im Extremfall sogar zum Reißen desselbigen kommen, was zu einem Verlust von Hydraulikflüssigkeit und somit zum Ausfall der Maschine führt.

Hydraulikschläuche haben darüber hinaus eine hohe Toleranz bezüglich ihres Außendurchmessers, so dass mit herkömmlichen Schlauchschellen diese entweder schlecht fixiert oder übermäßig stark gequetscht werden.

Aus WO 2015/177181 A1 ist eine Befestigungsvorrichtung für Schläuche mit zwei miteinander verbindbaren Verbindungsteilen mit jeweils einer Aussparung, durch die eine Durchführung für einen Schlauch gebildet ist, bekannt. Bei der vorbekannten Befestigungsvorrichtung ist vorgesehen, dass in die Befestigungskörper eine elastische Einlage eingelegt ist, wobei die zwischen dem Befestigungskörper und der elastischen Einlage vorgesehene Berührungsfläche zur Vibrations- und Schalldämpfung klein gehalten wird. Die schall- und vibrationsreduzierenden Eigenschaften wurden ferner vermindert, indem die Differenz zwischen Außendurchmesser und Innendurchmesser der Einlage möglichst groß gestaltet wird. Zur weiteren Schall- und Vibrationsreduzierung sind auf der Innenseite der elastischen Einlage Stützkörper angeordnet, so dass der in der Befestigungsvorrichtung aufgenommene Schlauch nur "punktuell" gelagert ist. Die elastische Einlage ist formschlüssig in dem Befestigungskörper gehalten.

Aus DE 603 09 630 T2 ist eine Befestigungsvorrichtung für Leitungen bekannt mit zwei miteinander verbindbaren Verbindungsteilen mit mehreren Aussparungen und mit an die Aussparungen angepassten Einlagen, wobei die Verbindungsteile und die Einlagen mehrere Durchführungen für Leitungen bilden. Die Einlagen werden durch eine steife Halbschale und eine als Zwischenlage ausgebildete elastische Halbschale gebildet. Die elastischen Halbschalen werden im Spritzgussverfahren in die Aussparungen eingegossen.

WO 2011/028705 A1 und DE 10 2012 216 236 A1 zeigen eine Befestigungsvorrichtung für Schläuche nach dem Oberbegriff des Anspruchs 1.

Bei den vorbekannten Befestigungsvorrichtungen hat sich herausgestellt, dass die Handhabung aufgrund mehrerer Einzelteile, die passgenau zueinander angeordnet werden müssen, wenig praktikabel ist und deren Zusammenbau bzw. das Verlegen von Hydraulikleitungen erschwert ist. Dies führt zu höherem Produktions- und Wartungsaufwand. Die formschlüssige Halterung der elastischen Einlage kann bei starken Vibrationen dazu führen, dass die elastische Einlage sich stark verformt und aus dem Befestigungskörper herausgedrückt wird. Weitere Ausführungsformen von Befestigungsvorrichtungen, bei denen die Befestigungsvorrichtung vollständig oder nahezu vollständig aus einem elastischen Material bestehen, besitzen den Nachteil, dass sich die Befestigungsvorrichtung beim Befestigen verziehen kann, nachgibt und/oder zusammengedrückt wird. Dies kann bspw. dazu führen, dass sich die Schellen ungewollt lösen oder den Hydraulikschlauch zu stark zusammen drücken. Außerdem wird, durch das elastische Material, die exakte Fixierung des Schlauches mit einem gewünschten Drehmoment, erschwert.

Es ist daher die Aufgabe der vorliegenden Erfindung, eine Befestigungsvorrichtung der eingangs genannten Art zu schaffen, die von einfachem Aufbau ist und eine vereinfachte Montage sowie eine sichere und zugleich schonende Schlauchfixierung ermöglicht, wobei ein Quetschen eines Schlauches möglichst vermieden werden soll.

Die erfindungsgemäße Befestigungsvorrichtung ist definiert durch die Merkmale des Anspruchs 1.

Die erfindungsgemäße Befestigungsvorrichtung weist zwei miteinander verbindbare Befestigungsteile mit jeweils mindestens einer Aussparung auf, wobei die Aussparung im miteinander verbundenen Zustand die Befestigungsteile mindestens eine Durchführung für mindestens einen Schlauch bilden. Die Befestigungsteile bestehen jeweils aus einem Befestigungskörper und einer elastischen Befestigungskomponente, wobei der Befestigungskörper eine geringere Elastizität aufweist als die elastische Befestigungskomponente und wobei jeweils in der Aussparung eine durch die elastische Lage gebildete Aussparungsfläche gebildet ist. Ferner ist die elastische Befestigungskomponente zur Bildung einer chemischen Verbindung mit dem Befestigungskörper an diesem angegossen. Die Erfindung ist dadurch gekennzeichnet, dass die Aussparungsfläche eine Hauptkrümmung in einer quer zur Durchführungsrichtung verlaufenden Hauptkrümmungsrichtung aufweist, wobei die Hauptkrümmung einen sich verändernden Radius aufweist. Mit anderen Worten: Die Aussparungsfläche weist keinen perfekt halbrunden Querschnitt auf, sondern der Querschnitt ist beispielsweise halb-oval.

Die erfindungsgemäße Befestigungsvorrichtung sieht somit vor, dass die Befestigungsteile jeweils einteilig ausgebildet sind, da die elastische Befestigungskomponente bei der Fertigung durch einen Gießprozess, beispielsweise durch Spritzguss, unlösbar angeformt ist. Die elastische Befestigungskomponente wird somit durch einen elastischen Abschnitt des Befestigungsteils gebildet. Bei einer Befestigung eines Schlauches sind somit lediglich die beiden Befestigungsteile miteinander zu verbinden, so dass eine sehr schnelle und einfache Montage ermöglicht wird. Im Rahmen der Erfindung wird unter dem Merkmal, dass die elastische Befestigungskomponente an dem Befestigungskörper angegossen ist, sowohl verstanden, dass zuerst der Befestigungskörper und anschließend die elastische Befestigungskomponente gegossen wird, als auch die umgekehrte Reihenfolge. Auch eine gleichzeitige Herstellung ist von der Erfindung umfasst.

Die Herstellung der Befestigungsvorrichtung kann beispielsweise über einen Zweikomponentenspritzguss (2K-Spritzguss) erfolgen. Der elastische Abschnitt kann eine dicke Schicht bilden, die die Aussparung zumindest teilweise auskleidet. Durch die chemische Verbindung wird eine sehr feste Verbindung zwischen dem Befestigungskörper und der elastischen Befestigungskomponente gebildet, wobei eine einfache Herstellung möglich ist. Durch das Vorsehen einer Hauptkrümmung der Aussparungsfläche mit einem sich ändernden Radius wird erreicht, dass bei Schläuchen, die aufgrund hoher Toleranzen nicht den vorgegebenen Außendurchmesser aufweisen, verhindert wird, dass der Strömungsquerschnitt des Schlauches durch eine Quetschung der Befestigungsvorrichtung unzulässig verändert wird, da sich dieser in der Durchführung entsprechend seitlich ausdehnen kann. Auch bei Schläuchen, deren Außendurchmesser etwas kleiner ausfällt, ist mit einer derartig ausgebildeten Aussparungsfläche eine Halterung in vorteilhafter Weise möglich.

Die Befestigungsvorrichtung besteht im Wesentlichen aus zwei Befestigungsteilen, die beispielsweise über Schrauben, miteinander verbunden werden. Somit ist auch eine einfache Lagerhaltung aufgrund der geringen Anzahl von Teilen möglich. Durch die elastische Befestigungskomponente wird ein Aufscheuern der in der Befestigungsvorrichtung gehaltenen Schläuche verhindert, da ausschließlich diese an dem entsprechenden Schlauch anliegt.

Die beiden an der Befestigungsvorrichtung bildenden Befestigungsteile sind vorzugsweise identisch. Dadurch wird der Herstellungs- und Lageraufwand gering gehalten. Unter geringerer Elastizität des Befestigungskörpers wird im Rahmen der Erfindung verstanden, dass der Befestigungskörper beispielsweise ein E-Modul aufweist, das mindestens das 100-fache des E-Moduls der elastischen Befestigungskomponente beträgt.

Die Aussparungsfläche der Befestigungsteile ist die Fläche, die bei der Halterung der Schläuche zumindest teilweise an den Schläuchen anliegt.

Die Aussparung weist vorzugsweise einen halbellipsenförmigen oder ellipsensegmentförmigen Querschnitt auf.

Vorzugsweise ist vorgesehen, dass die Aussparungsfläche zumindest in dem eine Durchführung für den Schlauch bildenden Bereich stufenlos ausgebildet ist. Die Aussparungsfläche kann somit mit einer großen Fläche an dem Schlauch anliegen, so dass die Belastung der äußeren Oberfläche des Schlauches gering gehalten wird. Ferner wird die Form der Befestigungsteile einfach gehalten, so dass keine aufwändig ausgestalteten Gießformen für die Herstellung notwendig sind.

Dadurch, dass der Befestigungskörper eine geringe Elastizität aufweist als die elastische Befestigungskomponente, kann eine vorteilhafte Befestigung eines Schlauches erfolgen, da der Befestigungskörper sich nur sehr gering verformt. Bei der Verwendung von beispielsweise Befestigungsschrauben zur Verbindung der Befestigungsteile kann beispielsweise ein definiertes Anzugsmoment oder ein Bereich des Anzugsmoments vorgegeben werden, mit der die Befestigungsteile miteinander verbunden werden sollen.

Vorzugsweise ist vorgesehen, dass der Befestigungskörper aus einem Thermoplast besteht und/oder dass die elastische Befestigungskomponente aus einem thermoplastischen Elastomer besteht. Derartige Materialien haben sich als besonders vorteilhaft herausgestellt. Bei der Verwendung des Befestigungskörpers aus einem Thermoplast und der elastischen Befestigungskomponente aus einem thermoplastischen Elastomer ist in vorteilhafter Weise gegeben, dass der gewünschte Elastizitätsunterschied zwischen diesen beiden Elementen besteht und darüber hinaus ist eine Kompatibilität der Materialien gegeben, so dass die chemische Verbindung durch das miteinander Vergießen erfolgen kann. Der Befestigungskörper kann beispielsweise aus einem Polypropylen (PP) oder einem Polyamid (PA) bestehen.

Bei der erfindungsgemäßen Befestigungsvorrichtung kann vorgesehen sein, dass die Befestigungsteile jeweils mehrere Aussparungen aufweisen, die im miteinander verbundenen Zustand der Befestigungsteile mehrere Durchführungen bilden. Mit anderen Worten: Die erfindungsgemäße Befestigungsvorrichtung kann eine Halterung für mehrere Schläuche bilden, so dass mehrere Schläuche parallel geführt werden können. Insbesondere bei Hydraulikschläuchen ist es zumeist notwendig, zwei parallele Schläuche zu verlegen, da zumindest eine Zu- und eine Ableitung zu einem Verbraucher notwendig sind. Somit ist die erfindungsgemäße Befestigungsvorrichtung insbesondere für Hydraulikschläuche geeignet. Die Aussparungen können unterschiedlich dimensioniert sein, so dass mit der erfindungsgemäßen Befestigungsvorrichtung auch Schläuche unterschiedlichen Durchmessers gehaltert werden können.

Dabei kann vorgesehen sein, dass die elastische Befestigungskomponente die Aussparungsfläche für mehrere oder alle Aussparungen eines Befestigungsteils bildet. Mit anderen Worten: Die elastische Befestigungskomponente erstreckt sich über mehrere Aussparungen bzw. ist ununterbrochen. Dadurch ist eine derart ausgebildete Befestigungsvorrichtung besonders einfach herstellbar.

Vorzugsweise ist vorgesehen, dass die Befestigungskörper der Befestigungsteile jeweils mindestens eine Anlagefläche für das jeweils andere Befestigungsteil bilden. Dadurch wird gewährleistet, dass die eine geringere Elastizität aufweisenden Befestigungskörper im befestigten Zustand der Befestigungsteile aneinander liegen, wodurch eine besonders stabile Verbindung der Befestigungsteile erreicht werden kann und ein unerwünschtes Verformen der Befestigungsteile verhindert werden kann.

In einem Ausführungsbeispiel der Erfindung ist vorgesehen, dass mindestens eines der Befestigungsteile eine Befestigungsaussparung aufweist. Über die Befestigungsaussparung kann die Befestigungsvorrichtung an ihrer Umgebung befestigt werden, beispielsweise an separaten Halterungen an einem Fahrzeug oder an Rohren.

Dabei kann vorgesehen sein, dass die Befestigungsaussparung einen separaten elastischen Abschnitt aufweist oder dass sich die elastische Befestigungskomponente in die Befestigungsaussparung erstreckt. Durch das Vorsehen eines elastischen Abschnitts in der Befestigungsaussparung kann erreicht werden, dass eine Übertragung von Vibrationen von der Umgebung auf die Befestigungsvorrichtung und umgekehrt verringert werden kann.

Im Folgenden wird unter die Bezugnahme auf die nachfolgenden Figuren die Erfindung näher erläutert. Es zeigen:
- Fig. 1a: eine schematische perspektivische Ansicht einer erfindungsgemäßen Befestigungsvorrichtung,
- Fig. 1b: eine schematische Seitenansicht eines Befestigungsteils der in Fig. 1a dargestellten Befestigungsvorrichtung und
- Fig. 2: eine schematische Seitenansicht eines Befestigungsteils einer zweiten Ausführungsform einer erfindungsgemäßen Befestigungsvorrichtung.

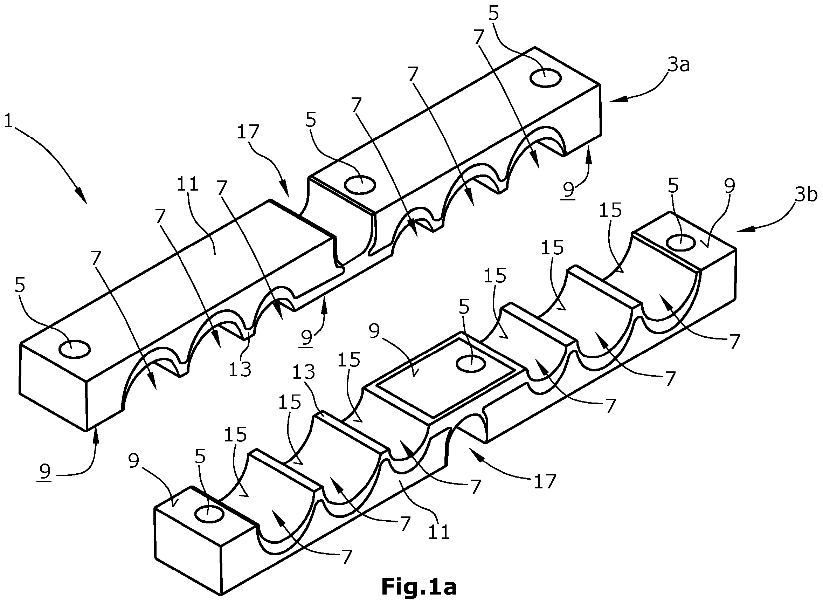

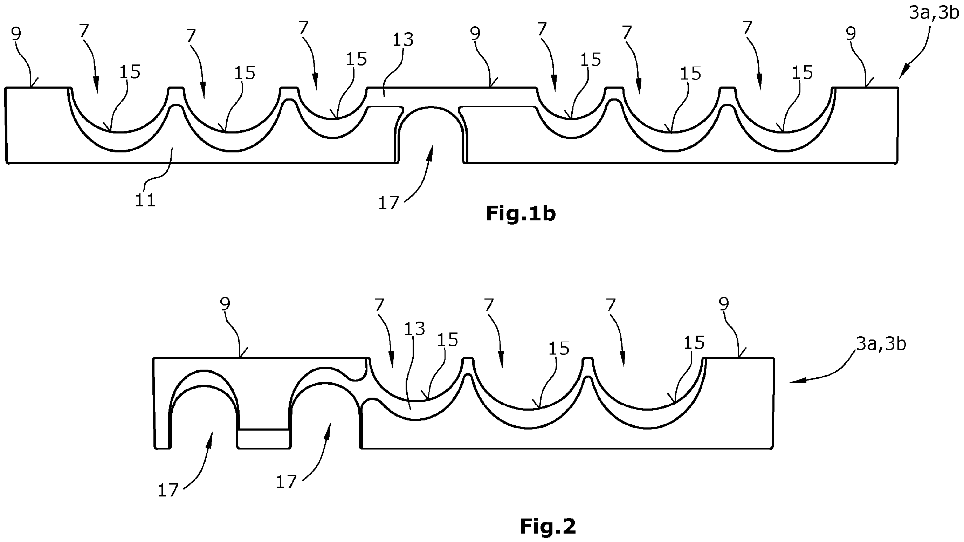

In Fign. 1a und 1b ist eine erfindungsgemäße Befestigungsvorrichtung schematisch dargestellt.

Die Befestigungsvorrichtung 1 besteht aus zwei Befestigungsteilen 3a,3b, die identisch ausgebildet sind. Die Befestigungsteile 3a,3b sind miteinander verbindbar, indem ein oberes Befestigungsteil 3a gegenüber dem unteren Befestigungsteil 3b umgedreht angeordnet wird. Die sich nun zugewandten Seiten der Befestigungsteile 3a,3b sind dadurch aneinander angepasst. In den Befestigungsteilen 3a,3b sind Durchgangsbohrungen 5 angeordnet, so dass die Befestigungsteile 3a,3b über Befestigungsmittel, wie beispielsweise Schrauben, miteinander verbunden werden können.

Die Befestigungsteile 3a,3b weisen jeweils Aussparungen 7 auf, die im miteinander verbundenen Zustand der Befestigungsteile 3a,3b Durchführungen für Schläuche, wie beispielsweise Hydraulikschläuche, bilden. Mit dem in den Fign. 1a und 1b dargestellten Ausführungsbeispiel können 6 Schläuche gehaltert werden. Die Befestigungsteile 3a,3b liegen im miteinander verbundenen Zustand über Anlageflächen 9 aneinander an.

Die Befestigungsteile 3a,3b bestehen jeweils aus einem Befestigungskörper 11 und einer elastischen Befestigungskomponente 13. Der Befestigungskörper und die elastische Befestigungskomponente 13 sind chemisch miteinander verbunden, wobei die elastische Befestigungskomponente 13 an dem Befestigungskörper 11 angegossen ist. Die Herstellung der Befestigungsvorrichtung 1 kann beispielsweise über einen Zweikomponentenspritzguss (2K-Spritzguss) erfolgen.

Die elastische Befestigungskomponete 13 ist in den Aussparungen 7 angeordnet und bildet in diesen jeweils eine Aussparungsfläche 15. Im Gebrauch liegen die Aussparungsflächen 15 teilweise an den Schläuchen an.

Wie am besten aus Fig. 1B ersichtlich ist, weisen die Aussparungen 7 jeweils einen halb-ovalen Querschnitt auf. Dieser entsteht, indem die Aussparungsfläche 15 eine quer zur Durchführungsrichtung verlaufende Hauptkrümmung aufweist, deren Radius sich verändert. Durch den ovalen Querschnitt wird erreicht, dass Schläuche, deren Außendurchmesser leicht größer ist als die von den Aussparungen 7 gebildeten Durchführungen nicht eingequetscht werden, sondern sich seitlich etwas ausdehnen können. Die Aussparungsflächen 15 sind stufenlos ausgebildet. Dadurch wird eine vorteilhafte Befestigung der Schläuche erreicht, da die Aussparungsflächen 15 in einem sehr großen Bereich an den Schläuchen anliegen können.

Der Befestigungskörper 11 weist eine wesentlich geringere Elastizität auf als die elastische Befestigungskomponente 13. Beispielsweise kann der Befestigungskörper 11 ein E-Modul von mindestens dem 200-fachen des E-Moduls der elastischen Befestigungskomponete 13 besitzen. Dadurch ist der Befestigungskörper wesentlich stabiler ausgestaltet und bei einer Verbindung der beiden Befestigungsteile 3a,3b wird verhindert, dass sich die Befestigungsteile 3a,3b in ungewünschter Weise verziehen. Dazu ist insbesondere vorgesehen, dass die Anlagenflächen 9 durch den Befestigungskörper 11 gebildet sind und somit die hohe Steifigkeit besitzen.

Der Befestigungskörper 11 kann beispielsweise aus einem Thermoplast bestehen, wohingegen die elastische Befestigungskomponente beispielsweise aus einem thermoplastischen Elastomer besteht.

Die elastische Befestigungskomponente 13 ist durchgängig ausgebildet, wobei neben der chemischen Verbindung auch zumindest teilweise eine formschlüssige Verbindung mit dem Befestigungskörper 11 gebildet ist, wodurch eine höhere Stabilität entstehen kann.

Auf der von den Aussparungen 7 gegenüberliegenden Seite weisen die Befestigungsteile 3a,3b jeweils eine Befestigungsaussparung 17 auf. Die elastische Befestigungskomponente 13 erstreckt sich in die Befestigungsaussparung 17. Über die Befestigungsaussparung 17 kann die erfindungsgemäße Befestigungsvorrichtung 1 in vorteilhafter Weise an ihrer Umgebung befestigt werden.

In Fig. 2 ist ein Befestigungsteil 3a,3b eines zweiten Ausführungsbeispiels einer erfindungsgemäßen Befestigungsvorrichtung schematisch in der Seitenansicht dargestellt. Das in Fig. 2 dargestellte Befestigungsteil 3a,3b ist ähnlich aufgebaut wie die in den Fign. 1A und 1B dargestellten Befestigungsteile 3a,3b, jedoch weist das in Fig. 2 dargestellte Befestigungsteil 3a,3b eine geringe Anzahl von Aussparungen 7 auf. Eine mit dem Befestigungsteil 3a,3b, das in Fig. 2 dargestellt ist, gebildete Befestigungsvorrichtung kann somit Durchführungen für drei Schläuche bilden.

Ferner weist das in Fig. 2 dargestellte Befestigungsteil 3a,3b zwei Befestigungsaussparungen 17 auf. Dadurch ist eine flexible Befestigung der Befestigungsvorrichtung möglich, indem eine der Befestigungsaussparungen benutzt wird. Alternativ können auch beide Befestigungsaussparungen 17 genutzt werden, wodurch eine besonders stabile Befestigung möglich ist, worüber hinaus ein Verdrehen der Befestigungsvorrichtung vermieden wird.

## Patentansprüche

1. Befestigungsvorrichtung (1) für Schläuche mit zwei miteinander verbindbaren Befestigungsteilen (3a,3b) mit jeweils mindestens einer Aussparung (7), die im miteinander verbundenen Zustand der Befestigungsteile (3a,3b) mindestens eine Durchführung für mindestens einen Schlauch bilden, wobei die Befestigungsteile (3a,3b) jeweils aus einem Befestigungskörper (11) mit einer elastischen Befestigungskomponente (13) bestehen, wobei der Befestigungskörper (11) eine geringere Elastizität aufweist als die elastische Befestigungskomponente (13), wobei jeweils die elastische Befestigungskomponente (13) in der Aussparung (7) eine Aussparungsfläche (15) bildet, und wobei die elastische Befestigungskomponente (13) zur Bildung einer chemischen Verbindung mit dem Befestigungskörper (11) an diesem angegossen ist
**dadurch gekennzeichnet, dass**
die Aussparungsfläche (15) eine Hauptkrümmung in einer quer zur Durchführungsrichtung verlaufenden Hauptkrümmungsrichtung aufweist, wobei die Hauptkrümmung einen sich verändernden Radius aufweist.

2. Befestigungsvorrichtung nach Anspruch 1, **dadurch gekennzeichnet, dass** die Aussparung (7) einen halbellipsenförmigen oder ellipsensegmentförmigen Querschnitt aufweist.

3. Befestigungsvorrichtung nach einem der Ansprüche 1 oder 2, **dadurch gekennzeichnet, dass** die Aussparungsfläche (15) zumindest in dem eine Durchführung für einen Schlauch bildenden Bereich stufenlos ist.

4. Befestigungsvorrichtung nach einem der Ansprüche 1 bis 3, **dadurch gekennzeichnet, dass** der Befestigungskörper (11) aus einem Thermoplast besteht und/oder dass die elastische Befestigungskomponente (13) aus einem thermoplastischen Elastomer besteht.

5. Befestigungsvorrichtung nach Anspruch 1 bis 4, **dadurch gekennzeichnet, dass** die Befestigungsteile (3a,3b) jeweils mehrere Aussparungen (7) aufweisen, die im miteinander verbundenen Zustand der Befestigungsteile (3a,3b) mehrere Durchführungen bilden.

6. Befestigungsvorrichtung nach Anspruch 5, **dadurch gekennzeichnet, dass** die elastische Befestigungskomponente (13) die Aussparungsfläche (15) mehrerer oder aller Aussparungen (7) eines Befestigungsteils (3a,3b) bilden.

7. Befestigungsvorrichtung nach einem der Ansprüche 1 bis 6, **dadurch gekennzeichnet, dass** die Befestigungskörper (11) der Befestigungsteile (3a,3b) jeweils mindestens eine Anlagefläche (9) für das jeweils andere Befestigungsteil (3a,3b) bilden.

8. Befestigungsvorrichtung nach einem der Ansprüche 1 bis 7, **dadurch gekennzeichnet, dass** mindestens eines der Befestigungsteile (3a,3b) eine Befestigungsaussparung (17) aufweist.

9. Befestigungsvorrichtung nach Anspruch 8, **dadurch gekennzeichnet, dass** die Befestigungsaussparung (17) einen separaten elastischen Abschnitt aufweist oder dass sich die elastische Befestigungskomponente (13) in die Befestigungsaussparung (17) erstreckt.

## Claims

1. Fastening device (1) for hoses comprising two fastening parts (3a, 3b) adapted to be joined with each other and each having at least one recess (7) which, in the joined state of the fastening parts (3a, 3b), form at least one passage for at least one hose, wherein the fastening parts (3a, 3b) are each formed by a fastening body (11) with an elastic fastening component (13), wherein the fastening body (11) has a lower elasticity than the elastic fastening component (13), wherein the elastic fastening component (13) respectively forms a recess surface (15) in the recess (7), and wherein the elastic fastening component (13) is molded to the fastening body (11) to form a chemical bond with the same,
**characterized in that**
the recess surface (15) has a main curvature in a main curvature direction extending transversely to the passage direction, wherein the main curvature has a changing radius.

2. Fastening device of claim 1, **characterized in that** the recess (7) has a cross section of semi-elliptic shape or shaped like a segment of an ellipse.

3. Fastening device of one of claims 1 or 2, **characterized in that** the recess surface (15) is stepless at least in the area forming a passage for a hose.

4. Fastening device of one of claims 1 to 3, **characterized in that** the fastening body (11) is formed of a thermoplastic material and/or that the elastic fastening component (13) is formed of a thermoplastic elastomer.

5. Fastening device of one of claims 1 to 4, **characterized in that** the fastening parts (3a, 3b) each have a plurality of recesses (7) which, in the joined state of the fastening parts (3a, 3b), form a plurality of passages.

6. Fastening device of claim 5, **characterized in that** the elastic fastening component (13) forms the recess surface (15) of a plurality or all recesses (7) of a fastening part (3a, 3b).

7. Fastening device of one of claims 1 to 6, **characterized in that** the fastening bodies (11) of the fastening parts (3a, 3b) each form at least one contact surface (9) for the respective other fastening part (3a, 3b).

8. Fastening device of one of claims 1 to 7, **characterized in that** the at least one of the fastening parts (3a, 3b) comprises a fastening recess (17).

9. Fastening device of claim 8, **characterized in that** the fastening recess (17) comprises a separate elastic section, or that the elastic fastening component (13) extends into the fastening recess (17).

## Revendications

1. Dispositif de fixation (1) pour flexibles doté de deux pièces de fixation (3a, 3b) pouvant être reliées l'une à l'autre dotées d'au moins un évidement (7) chacune, lesquels forment au moins un passage pour au moins un flexible dans l'état relié l'une à l'autre des pièces de fixation (3a, 3b), dans lequel les pièces de fixation (3a, 3b) sont respectivement constituées d'un corps de fixation (11) doté d'un composant de fixation élastique (13), dans lequel le corps de fixation (11) présente une élasticité moindre que le composant de fixation élastique (13), dans lequel le composant de fixation élastique (13) forme dans l'évidement (7) respectif une surface d'évidement (15), et dans lequel le composant de fixation élastique (13) est coulé sur le corps de fixation (11) afin de former une liaison chimique avec celui-ci
**caractérisé en ce que**
la surface d'évidement (15) présente une courbure principale dans une direction de courbure principale transversale par rapport à la direction de passage, dans lequel la courbure principale présente un rayon variable.

2. Dispositif de fixation selon la revendication 1, **caractérisé en ce que** l'évidement (7) présente une section en forme de demi-ellipse ou de segment d'ellipse.

3. Dispositif de fixation selon la revendication 1 ou 2, **caractérisé en ce que** la surface d'évidement (15) est continue au moins dans la zone formant un passage pour un flexible.

4. Dispositif de fixation selon l'une des revendications 1 à 3, **caractérisé en ce que** le corps de fixation (11) est constitué d'une résine thermoplastique et/ou **en ce que** le composant de fixation élastique (13) est constitué d'un élastomère thermoplastique.

5. Dispositif de fixation selon l'une des revendications 1 à 4, **caractérisé en ce que** les pièces de fixation (3a, 3b) présentent chacune plusieurs évidements (7), lesquels forment plusieurs passages dans l'état relié l'une à l'autre des pièces de fixation (3a, 3b).

6. Dispositif de fixation selon la revendication 5, **caractérisé en ce que** les composants de fixation élastique (13) forment les surfaces d'évidement (15) de plusieurs ou de tous les évidements (7) d'une pièce de fixation (3a, 3b).

7. Dispositif de fixation selon l'une des revendications 1 à 6, **caractérisé en ce que** les corps de fixation (11) des pièces de fixation (3a, 3b) forment chacun au moins une surface d'appui (9) pour l'autre pièce de fixation (3a, 3b) respective.

8. Dispositif de fixation selon l'une des revendications 1 à 7, **caractérisé en ce qu'**au moins une des pièces de fixation (3a, 3b) présente un évidement de fixation (17).

9. Dispositif de fixation selon la revendication 8, **caractérisé en ce que** l'évidement de fixation (17) présente une section élastique séparée ou **en ce que** le composant de fixation élastique (13) s'étend dans l'évidement de fixation (17).
